(19) Europäisches Patentamt / European Patent Office / Office européen des brevets

(11) **EP 3 325 409 B1**

(12) **FASCICULE DE BREVET EUROPEEN**

(45) Date de publication et mention de la délivrance du brevet:
**07.10.2020 Bulletin 2020/41**

(21) Numéro de dépôt: **16742350.8**

(22) Date de dépôt: **30.06.2016**

(51) Int Cl.:
*C01F 11/18* (2006.01)     *C09C 1/02* (2006.01)
*D21H 17/67* (2006.01)    *D21H 17/00* (2006.01)
*D21H 19/38* (2006.01)    *D21H 17/69* (2006.01)

(86) Numéro de dépôt international:
**PCT/FR2016/051624**

(87) Numéro de publication internationale:
**WO 2017/013323 (26.01.2017 Gazette 2017/04)**

(54) **PRODUCTION DE CARBONATE DE CALCIUM PRECIPITE**

HERSTELLUNG VON GEFÄLLTEM CALCIUMCARBONAT

PRODUCTION OF PRECIPITATED CALCIUM CARBONATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.07.2015 FR 1556789**

(43) Date de publication de la demande:
**30.05.2018 Bulletin 2018/22**

(73) Titulaire: **COATEX**
**69730 Genay (FR)**

(72) Inventeur: **JACQUEMET, Christian**
**69005 Lyon (FR)**

(74) Mandataire: **Balmefrezol, Ludovic Francis Pierre**
**Coatex SAS**
**35, rue Ampère**
**69730 Genay (FR)**

(56) Documents cités:
**EP-A1- 2 868 716      WO-A1-2007/067146**
**US-A1- 2013 312 925**

• YUKO SONOBE ET AL: "Polymorphism, Size and Shape Control of Calcium Carbonate Crystals in the Presence of a Polyelectrolyte", CHEMICAL ENGINEERING AND TECHNOLOGY, vol. 38, no. 6, 6 juin 2015 (2015-06-06), pages 1053-1058, XP055278802, DE ISSN: 0930-7516, DOI: 10.1002/ceat.201400731 cité dans la demande

EP 3 325 409 B1

## Description

La présente invention concerne l'utilisation d'une cellulose carboxylée dépolymérisée pour préparer une suspension aqueuse de Carbonate de Calcium Précipité (CCP), ladite cellulose carboxylée dépolymérisée étant éventuellement utilisée en combinaison avec au moins un additif d'extinction.

## Contexte de l'invention

Le carbonate de calcium est l'un des additifs les plus utilisés dans les industries du papier, de la peinture et des plastiques. Le Carbonate de Calcium Naturel (CCN) est, par exemple, utilisé comme charge minérale dans de nombreuses applications. Le Carbonate de Calcium Précipité (CCP), quant à lui, peut être fabriqué sur mesure en termes de morphologie et de granulométrie, ce qui confère d'autres propriétés aux matériaux qui le contiennent. Le Carbonate de Calcium Précipité Scalénoédrique (CCP-S) est en particulier utilisé comme charge minérale en combinaison avec des fibres de cellulose dans des applications charge de masse dans le papier.

Les procédés de production de CCP comprennent les étapes consistant en l'extinction d'un matériau contenant de l'oxyde de calcium (généralement appelé « chaux vive ») avec de l'eau de manière à produire une suspension d'hydroxyde de calcium (généralement appelée « lait de chaux »), puis la synthèse subséquente du carbonate de calcium en faisant circuler du dioxyde de carbone à travers ladite suspension d'hydroxyde de calcium résultante. De tels procédés produisent des suspensions de CCP ayant une faible teneur en matière sèche. Par conséquent, ces procédés comprennent généralement une étape additionnelle de concentration afin d'obtenir une suspension de CCP présentant un extrait sec plus élevé, ce qui représente un intérêt lors du transport de la suspension de CCP. Néanmoins, de telles étapes supplémentaires de concentration sont consommatrices d'énergie, coûteuses et nécessitent d'avoir recours à un équipement spécifique (par exemple une centrifugeuse, nécessitant un entretien important). Par ailleurs, l'utilisation de tels équipements peut conduire à détruire la structure du CCP formé, comme c'est notamment le cas du CCP-S préparé sous forme de clusters.

Les procédés de préparation de CCP en présence de différents additifs sont décrits dans la littérature.

Un certain nombre de documents s'intéresse à la préparation de CCP en présence de polymères chargés négativement, par exemple de polymères d'acide (méth)acrylique.

Notamment, le document WO 2005/000742 A1 porte sur un procédé de préparation de CCP lamellaire comprenant les étapes consistant à fournir une suspension d'hydroxyde de calcium, carbonatant ladite suspension, et à ajouter un polyacrylate à la suspension avant la fin de la carbonatation pour précipiter le carbonate de calcium lamellaire.

Egalement, la demande de brevet non publiée EP 14166751.9 déposée au nom des présents demandeurs concerne l'utilisation d'une combinaison d'au moins un polymère hydrosoluble (par exemple un acide polyacrylique) et d'au moins un additif d'extinction dans un procédé de production d'une suspension aqueuse de carbonate de calcium précipité.

D'autres documents décrivent l'utilisation d'additifs chargés positivement préparés, par exemple, à partir d'unités monomériques possédant une amine quaternaire.

La demande de brevet non publiée FR 15 51690 déposée au nom des présents demandeurs concerne l'utilisation d'un polymère cationique, éventuellement en présence d'un additif d'extinction, dans un procédé de production d'une suspension aqueuse de carbonate de calcium précipité. L'invention décrite dans ce document permet de préparer des suspensions de CCP ayant des charges de surface cationiques, même aux pH alcalins.

Enfin, d'autres documents s'intéressent à l'utilisation d'additifs au moins partiellement bio-sourcés. Par exemple, la demande de brevet WO 2007/067146 A1 décrit un procédé de préparation de CCP en présence d'amidon ou de carboxyméthylcellulose (CMC).

Le document EP 2868716 concerne l'utilisation de carboxyméthylcellulose dépolymérisée pour l'aide au broyage de minéraux en vue de préparer une suspension aqueuse des particules minérales.

L'article de Sonobe *et al.* intitulé *Polymorphism, size and shape control of calcium carbonate crystals in the presence of a polyelectrolyte* concerne les conditions de carbonatation selon lesquelles des modifications cristallographiques du carbonate de calcium peuvent être obtenues au moyen de polyacrylates ou de CMC neutralisée.

Le document US 2013/0312925 concerne l'amélioration des propriétés mécaniques ou optiques de papier en mettant en œuvre différents polysaccharides, dont de la CMC, lors de la préparation de CCP utilisé ultérieurement lors de la préparation du papier.

## Objets de l'invention

Un objet de la présente invention est de fournir une solution pour la production de suspensions de CCP utilisant un additif d'origine bio-sourcée, c'est-à-dire non issu d'une énergie fossile. Cette démarche s'inscrit dans un concept de chimie verte et de développement durable.

Un autre objet de la présente invention est de fournir une solution pour la production de suspensions de CCP ayant, par exemple, une forte teneur en matière sèche, sans avoir recours à une étape supplémentaire de concentration thermique ou mécanique.

Un autre objet de la présente invention est de fournir une solution pour la production de suspensions de CCP à forte teneur en matière sèche ayant des viscosités facilement gérables, c'est-à-dire une solution permettant d'augmenter la teneur en matière sèche des suspensions de CCP, tout en empêchant l'augmentation de la viscosité des suspensions.

Il est également souhaitable que ladite solution n'affecte pas négativement la cinétique de l'étape de carbonatation et/ou n'altère pas la structure cristallographique du CCP.

Un autre objet de la présente invention est de fournir une solution pour la préparation de suspensions de CCP à utiliser directement comme charge minérale dans un procédé de fabrication de papier.

**Brève description de l'invention**

La présente invention concerne l'utilisation d'au moins une solution de cellulose carboxylée dépolymérisée pour préparer une suspension aqueuse de Carbonate de Calcium Précipité (CCP) par extinction d'un matériau contenant de l'oxyde de calcium dans de l'eau puis carbonatation du lait de chaux ainsi obtenu.

Ladite solution de cellulose carboxylée dépolymérisée présente un extrait sec compris entre 25 % et 40 % en poids par rapport au poids total de la solution.

Ladite cellulose carboxylée dépolymérisée présente un poids moléculaire Mw compris entre 10 000 g/mol et 40 000 g/mol.

La présente invention concerne, en outre, l'utilisation d'une combinaison d'au moins une solution de cellulose carboxylée dépolymérisée et d'au moins un additif d'extinction dans un procédé de production d'une suspension aqueuse de carbonate de calcium précipité.

La présente invention concerne également l'utilisation d'au moins une solution de cellulose carboxylée dépolymérisée pour préparer du Carbonate de Calcium Précipité (CCP) sous forme sèche, par extinction d'un matériau contenant de l'oxyde de calcium dans de l'eau, carbonatation du lait de chaux ainsi obtenu et au moins séchage de la suspension de CCP.

**Description détaillée de l'invention**

Définitions

Aux fins de la présente invention, les termes cités ci-après doivent être compris comme ayant les significations suivantes :

Par « matériau contenant de l'oxyde de calcium », on entend un matériau minéral ou de synthèse ayant une teneur en oxyde de calcium d'au moins 50 % en poids, par exemple d'au moins 75 % en poids, ou d'au moins 90 % en poids ou encore d'au moins 95 % en poids par rapport au poids total du matériau contenant de l'oxyde de calcium.

Par « matériau minéral », on entend une substance solide ayant une composition chimique inorganique définie et une structure caractéristique cristalline et/ou amorphe.

Par « Carbonate de Calcium Naturel (CCN) », on entend un carbonate de calcium obtenu à partir de sources naturelles telles que le calcaire, le marbre ou la craie et soumis à un traitement par voie humide et/ou sèche tel qu'un broyage, un tamisage et/ou un fractionnement, par exemple à l'aide d'un cyclone ou d'un trieur.

Par « Carbonate de Calcium Précipité (CCP) », on entend un matériau de synthèse obtenu généralement par précipitation suite à la réaction de dioxyde de carbone et d'hydroxyde de calcium (chaux hydratée) en milieu aqueux ou par précipitation d'une source de calcium et d'une source de carbonate dans l'eau. D'autre part, le carbonate de calcium précipité peut également être le produit permettant d'introduire des sels de calcium et de carbonate, du chlorure de calcium et du carbonate de sodium, par exemple dans un milieu aqueux. Le CCP peut être sous forme vatérite, calcite ou aragonite. Les CCP sont décrits, par exemple, dans les documents EP 2447213 A1, EP 2524898 A1, EP 2371766 A1.

Aux fins de la présente invention, la « teneur en matière sèche » ou « extrait sec » d'une composition liquide est une mesure de la quantité restante de matériau après évaporation de tous les solvants ou de l'eau.

Dans l'ensemble du présent document, la « granulométrie » du carbonate de calcium précipité ou des autres matériaux particulaires est décrite par sa distribution granulométrique. La valeur $d_x$ représente le diamètre pour lequel $x$ % en poids des particules ont un diamètre inférieur à $d_x$. Cela signifie que la valeur $d_{20}$ est la granulométrie à laquelle 20 % en poids de toutes les particules ont un diamètre inférieur à la valeur d et la valeur $d_{98}$ est la granulométrie à laquelle 98 % en poids de toutes les particules ont un diamètre inférieur à la valeur d. La valeur $d_{98}$ est également appelée « coupe supérieure ». La valeur $d_{50}$ est appelée la granulométrie médiane en poids, c'est-à-dire que 50 % en poids des particules ont un diamètre inférieur ou supérieur à cette granulométrie. Aux fins de la présente invention, la granulométrie est indiquée comme étant la granulométrie médiane en poids $d_{50}$ sauf indication contraire. Pour déterminer la granulométrie médiane en poids $d_{50}$ ou la granulométrie de la coupe supérieure $d_{98}$, un appareil Sedigraph 5100 ou 5120 de la société Micromeritics, USA, peut être utilisé.

Une « surface spécifique selon la méthode BET (SS) », au sens de la présente invention, est définie comme étant la surface des particules de carbonate de calcium précipité divisée par la masse des particules de CCP. Telle qu'utilisée ici, la surface spécifique est mesurée par adsorption de $N_2$ à l'aide des isothermes BET (ISO 9277:1995) et est indiquée en $m^2/g$. Au sens de la présente invention, « stable dans une suspension aqueuse ayant un pH de 12 et une température de 90°C » signifie que l'additif polymérique conserve ses propriétés physiques et sa structure chimique lorsqu'il est ajouté à une suspension aqueuse ayant un pH de 12 et une température de 90°C. Par exemple, l'additif polymérique conserve ses qualités de dispersion et n'est pas dépolymérisé ou dégradé dans lesdites conditions.

Aux fins de la présente invention, le terme « viscosité » ou « viscosité Brookfield » fait référence à la viscosité Brookfield. La viscosité Brookfield est mesurée à l'aide d'un viscosimètre Brookfield (type RVT) à 25°C $\pm$ 1°C à 100 tr/min en utilisant un mobile approprié et est indiquée en mPa.s.

Aux fins de la présente invention, les matériaux « hydrosolubles » sont définis comme étant des matériaux qui, lorsqu'ils sont mélangés avec de l'eau désionisée et filtrés sur un filtre ayant une dimension des pores de 0,2 $\mu m$ à 20°C pour récupérer le filtrat liquide, conduisent à une masse inférieure ou égale à 0,1 g de matériau solide récupéré après évaporation entre 95°C et 100°C de 100 g dudit filtrat liquide. Les matériaux « hydrosolubles » sont définis comme étant des matériaux conduisant à une masse supérieure à 0,1 g de matériau solide récupéré après évaporation entre 95°C et 100°C de 100 g dudit filtrat liquide.

Une « suspension », au sens de la présente invention, comprend des solides insolubles et de l'eau, et éventuellement d'autres additifs. Elle est susceptible de contenir des quantités importantes de solides et donc d'être plus visqueuse et d'avoir une densité supérieure à celle du liquide dont elle est formée.

Le terme « comprenant », tel qu'utilisé dans la présente description et les présentes revendications, n'exclut pas d'autres éléments. Aux fins de la présente invention, le terme « constitué par » est considéré comme étant un mode de réalisation préféré du terme « comprenant ». Si un groupe est défini ci-après comme comprenant au moins un certain nombre de modes de réalisation, il convient également de comprendre qu'il décrit un groupe qui n'est constitué de préférence que de ces modes de réalisation.

Les termes « pouvant être obtenu » ou « pouvant être défini » et « obtenu » ou « défini » sont utilisés de façon interchangeable. Par exemple, cela signifie que, sauf si le contexte dicte le contraire, le terme « obtenu » n'indique pas qu'un mode de réalisation doit être obtenu par la séquence d'étapes suivant le terme « obtenu » même si une telle compréhension limitée est toujours incluse par le terme « obtenu » ou « défini » comme un mode de réalisation préféré.

Cellulose carboxylée dépolymérisée et procédé de préparation

Par « cellulose carboxylée », on entend une cellulose qui a été modifiée chimiquement et comporte des unités carboxyliques, par exemple des unités carboxyméthyl -$CH_2$-COOH. La cellulose carboxylée est, au moins partiellement, d'origine bio-sourcée. Elle peut être fournie sous forme de poudre ou sous forme de solution, par exemple sous forme de solution aqueuse.

Selon un mode de réalisation de la présente invention, la cellulose carboxylée est la carboxyméthylcellulose.

Dans le cadre de la présente invention, on utilise une cellulose carboxylée qui a été dépolymérisée pour présenter un poids moléculaire optimal pour la présente application. Les inventeurs démontrent en effet que l'utilisation d'une CMC non dépolymérisée ne permet pas d'augmenter la teneur en matière sèche du lait de chaux tout en maintenant une viscosité permettant la manipulation de la suspension.

Dans le cadre de la présente invention, les termes « additif polymérique » et « cellulose carboxylée dépolymérisée » sont utilisés de manière équivalente.

Selon un mode de réalisation de la présente invention, ladite solution de cellulose carboxylée dépolymérisée est obtenue selon un procédé décrit dans la demande de brevet WO 2015/063402. Notamment, ladite solution de cellulose carboxylée dépolymérisée peut être obtenue selon un procédé comprenant :

1) une étape de dépolymérisation selon laquelle :

la) on dispose d'une cellulose carboxylée à dépolymériser présentant un degré de substitution compris entre 0,2 et 2,

1b) on chauffe un réacteur contenant de l'eau à une température comprise entre 50°C et 85°C (bornes incluses), par exemple à une température comprise entre 75°C et 85°C (bornes incluses),

1c) on ajoute dans le réacteur de manière progressive et simultanée la cellulose carboxylée à dépolymériser et un peroxyde en maintenant la température selon 1b) et

1d) après ajout de la totalité des réactifs selon 1c), on maintient la température du mélange selon 1b) jusqu'à la consommation totale du peroxyde,

2) une étape de refroidissement du mélange à une température inférieure à 75°C, par exemple à une température inférieure à 70°C et

3) éventuellement une étape de neutralisation du mélange.

La cellulose carboxylée dépolymérisée présente un poids moléculaire Mw compris entre 10 000 g/mol et 40 000 g/mol, par exemple entre 13 000 g/mol et 35 000 g/mol ou par exemple entre 13 000 g/mol et 25 000 g/mol.

Le poids moléculaire de la cellulose carboxylée dépolymérisée peut être déterminé par Chromatographie d'Exclusion Stérique (CES) ou en anglais « Gel Permeation Chromatography » (GPC). Cette méthode est notamment décrite dans la demande de brevet WO 2015/063402. En outre, un exemple précis de mesure est donné dans la partie expérimentale de la présente demande de brevet.

L'indice de polydispersité IP correspond à la distribution des poids moléculaires des différentes macromolécules au sein de la cellulose obtenue. Si toutes les macromolécules présentent un poids moléculaire Mw voisin, l'indice IP diminue et se rapproche de la valeur théorique de 1. Si par contre, les macromolécules présentent des poids moléculaires différents, l'indice IP augmente.

Selon un mode de réalisation de la présente invention, ladite cellulose carboxylée dépolymérisée présente un indice de polydispersité IP compris entre 2 et 10, par exemple compris entre 3 et 5.

Selon un mode de réalisation, la cellulose carboxylée dépolymérisée est fournie sous la forme d'une solution.

La solution de cellulose carboxylée dépolymérisée présente un extrait sec compris entre 25 % et 40 % en poids par rapport au poids total de la solution ; ou un extrait sec supérieur à 30 % en poids, par exemple entre 30 % et 40 % en poids par rapport au poids total de la solution ou par exemple entre 31 % et 35 % en poids.

Selon un mode de réalisation de la présente invention, ladite cellulose carboxylée dépolymérisée est partiellement ou totalement neutralisée au moyen d'un ou plusieurs agent(s) de neutralisation choisi(s) dans le groupe consistant en les hydroxydes de sodium, les hydroxydes de calcium, les hydroxydes de magnésium, les hydroxydes de potassium et les amines.

## Matériau contenant de l'oxyde de calcium

La suspension aqueuse de CCP est préparée par extinction d'un matériau contenant de l'oxyde de calcium CaO. Ainsi, dans le procédé de production d'une suspension aqueuse de carbonate de calcium précipité, un matériau contenant de l'oxyde de calcium est fourni. Ledit matériau contenant de l'oxyde de calcium peut être obtenu en calcinant un matériau contenant du carbonate de calcium. La calcination est un procédé de traitement thermique appliqué au matériau contenant du carbonate de calcium afin de provoquer une décomposition thermique conduisant à la formation d'oxyde de calcium et de dioxyde de carbone gazeux. Les matériaux contenant du carbonate de calcium qui peuvent être utilisés dans un tel procédé de calcination sont ceux choisis dans le groupe comprenant les carbonates de calcium précipités, les minéraux naturels contenant du carbonate de calcium tels que le marbre, le calcaire et la craie, et les minéraux contenant un mélange de carbonates alcalino-terreux comprenant du carbonate de calcium tels que la dolomite ou des fractions riches en carbonate de calcium provenant d'autres sources. Il est également possible de soumettre un matériau résiduel contenant du carbonate de calcium à un procédé de calcination afin d'obtenir un matériau contenant de l'oxyde de calcium.

Le carbonate de calcium se décompose à environ 1 000°C en oxyde de calcium (appelé communément chaux vive). L'étape de calcination peut être effectuée dans des conditions et en utilisant des équipements bien connus de l'homme du métier. En règle générale, la calcination peut être effectuée dans des fours ou des réacteurs (parfois appelés fourneaux) de conceptions diverses, notamment les fours à cuve, les fours rotatifs, les fours à foyers multiples et les réacteurs à lit fluidisé.

La fin de la réaction de calcination peut être déterminée, par exemple, en surveillant le changement de densité, la teneur résiduelle en carbonate, par exemple par diffraction des rayons X, ou la réactivité de l'extinction par des méthodes courantes.

Selon un mode de réalisation de la présente invention, le matériau contenant de l'oxyde de calcium est obtenu en calcinant un matériau contenant du carbonate de calcium, par exemple choisi dans le groupe constitué par le carbonate de calcium précipité, les minéraux naturels contenant du carbonate de calcium tels que le marbre, le calcaire et la craie, les minéraux contenant un mélange de carbonates alcalino-terreux comprenant du carbonate de calcium tels que la dolomite ou leurs mélanges.

Pour des raisons d'efficacité, il est préféré que le matériau contenant de l'oxyde de calcium ait une teneur minimale en oxyde de calcium d'au moins 75 % en poids, de préférence au moins 90 % en poids et de manière préférée entre toutes de 95 % en poids par rapport au poids total du matériau contenant de l'oxyde de calcium. Selon un mode de réalisation, le matériau contenant de l'oxyde de calcium consiste en de l'oxyde de calcium.

Le matériau contenant de l'oxyde de calcium peut être constitué d'un seul type de matériau contenant de l'oxyde de calcium. Alternativement, le matériau contenant de l'oxyde de calcium peut être constitué d'un mélange d'au moins deux types de matériaux contenant de l'oxyde de calcium.

Le matériau contenant de l'oxyde de calcium peut être utilisé dans le procédé de l'invention sous sa forme originale, c'est-à-dire sous forme de matériau brut, par exemple de morceaux plus ou moins gros. Alternativement, le matériau contenant de l'oxyde de calcium peut être broyé avant utilisation. Selon un mode de réalisation de la présente invention, le matériau contenant du carbonate de calcium est sous forme de particules ayant une granulométrie médiane en poids $d_{50}$ allant de 0,1 $\mu$m à 1 000 $\mu$m et, par exemple, de 1 $\mu$m à 500 $\mu$m.

Utilisation de la cellulose carboxylée dépolymérisée

La présente invention concerne l'utilisation d'une cellulose carboxylée dépolymérisée pour préparer un Carbonate de Calcium Précipité (CCP).

Plus précisément, la présente invention concerne l'utilisation d'une solution de cellulose carboxylée dépolymérisée pour préparer un Carbonate de Calcium Précipité (CCP) sous forme sèche ou sous forme d'une solution aqueuse ou suspension aqueuse.

Les procédés de production d'une suspension aqueuse de CCP comprennent généralement les étapes consistant à (i) préparer un lait de chaux en mélangeant de l'eau et le matériau contenant de l'oxyde de calcium, et éventuellement le au moins un additif d'extinction, et (ii) carbonater le lait de chaux obtenu à l'étape (i) pour former une suspension aqueuse de carbonate de calcium précipité.

Par « carbonater », on entend faire circuler du dioxyde de carbone au sein de la suspension d'hydroxyde de calcium $Ca(OH)_2$, de manière à former du carbonate de calcium $CaCO_3$ précipité.

Selon la présente invention, au moins une solution de cellulose carboxylée dépolymérisée est utilisée pour préparer une suspension aqueuse de Carbonate de Calcium Précipité (CCP) par extinction d'un matériau contenant de l'oxyde de calcium dans de l'eau puis carbonatation du lait de chaux ainsi obtenu, ladite solution de cellulose carboxylée dépolymérisée présentant un extrait sec compris entre 25 % et 40 % en poids par rapport au poids total de la solution et un poids moléculaire Mw compris entre 10 000 g/mol et 40 000 g/mol.

*Etape d'extinction*

Dans la première étape du procédé de production de CCP, c'est-à-dire « l'étape d'extinction » (nommée étape i) ci-dessus), un lait de chaux est préparé en mélangeant de l'eau, le matériau contenant de l'oxyde de calcium, la cellulose carboxylée dépolymérisée et éventuellement le au moins un additif d'extinction.

La réaction du matériau contenant de l'oxyde de calcium avec de l'eau conduit à la formation d'une suspension laiteuse d'hydroxyde de calcium, mieux connue sous le nom de lait de chaux. Ladite réaction est fortement exothermique et est également appelée dans l'art « extinction de chaux ».

Selon un mode de réalisation, ladite solution de cellulose carboxylée dépolymérisée est présente dans l'eau d'extinction du matériau contenant de l'oxyde de calcium.

Selon un mode de réalisation de la présente invention, la température de l'eau, qui est utilisée dans l'étape d'extinction, c'est-à-dire la température de l'eau qui est utilisée pour l'extinction du matériau contenant de l'oxyde de calcium, est ajustée afin d'être comprise dans la gamme allant de 0°C à 100°C, par exemple de 1°C à 70°C ou de 2°C à 50°C ou de 30°C à 50°C ou de 35°C à 45°C. Il apparaitra évident à l'homme du métier que la température initiale de l'eau n'est pas nécessairement la même que la température du mélange préparé dans l'étape d'extinction du fait du caractère fortement exothermique de la réaction d'extinction et/ou du mélange de substances ayant différentes températures.

Selon un mode de réalisation de la présente invention, l'étape d'extinction du procédé comprend les étapes consistant à :

a1) mélanger la solution de cellulose carboxylée dépolymérisée avec de l'eau, éventuellement le au moins un additif d'extinction et
a2) ajouter le matériau contenant de l'oxyde de calcium au mélange de l'étape a1). Selon un mode de réalisation, l'étape a1) est réalisée à une température comprise entre 0°C et 99°C, par exemple entre 1°C et 70°C ou entre 2°C et 50°C ou entre 30°C et 50°C ou entre 35°C et 45°C.

Selon un autre mode de réalisation de la présente invention, l'étape d'extinction du procédé comprend les étapes consistant à :

b1) mélanger le matériau contenant de l'oxyde de calcium, la solution de cellulose carboxylée dépolymérisée, et éventuellement le au moins un additif d'extinction et
b2) ajouter de l'eau au mélange de l'étape b1).

Selon encore un autre mode de réalisation de la présente invention, dans l'étape d'extinction du procédé, le matériau contenant de l'oxyde de calcium, la cellulose carboxylée dépolymérisée, éventuellement le au moins un additif d'extinction et de l'eau sont mélangés simultanément.

Selon encore un autre mode de réalisation de la présente invention, le au moins un additif d'extinction est ajouté avant ou après l'étape d'extinction du procédé.

La solution de cellulose carboxylée dépolymérisée peut être ajoutée à l'étape d'extinction en totalité ou en plusieurs parties, par exemple en deux, trois, quatre, cinq parties ou plus. L'étape d'extinction du procédé peut être réalisée à température ambiante, c'est-à-dire à une température de 20°C $\pm$ 2°C ou à une température initiale comprise entre 30°C et 50°C ou entre 35°C et 45°C. La réaction étant exothermique, la température atteint généralement une température comprise entre 85°C et 99°C au cours de l'étape i), de préférence une température comprise entre 90°C et 95°C. Selon un mode de réalisation préféré, l'étape i) du procédé est réalisée en mélangeant ou en agitant, par exemple sous agitation mécanique. L'équipement approprié pour le mélange ou l'agitation du procédé est connu de l'homme du métier.

La progression de la réaction d'extinction peut être observée en mesurant la température et/ou la conductivité du mélange réactionnel.

Les inventeurs ont constaté avec surprise que l'ajout d'une cellulose carboxylée dépolymérisée spécifique telle que définie précédemment et éventuellement d'un additif d'extinction tel que défini précédemment, avant ou pendant l'étape d'extinction d'un procédé de production de CCP, peut permettre la préparation non seulement d'un lait de chaux ayant une faible teneur en matière sèche mais aussi d'un lait de chaux ayant une forte teneur en matière sèche. En effet, il est intéressant de noter que, selon un aspect de l'invention, en carbonatant ledit lait de chaux fortement concentré, il est possible d'obtenir une suspension aqueuse de CCP qui a également une forte teneur en matière sèche. En conséquence, le procédé de la présente invention ne nécessite pas d'étape de concentration supplémentaire afin d'obtenir une suspension de CCP ayant une forte teneur en matière sèche.

Selon un mode de réalisation de la présente invention, le lait de chaux de l'étape d'extinction a une teneur en matière sèche d'au moins 15 % en poids, par exemple allant de 15 % à 45 % en poids ou par exemple de 20 % à 40 % en poids ou par exemple de 25 % à 37 % en poids par rapport au poids total du lait de chaux.

Selon un mode de réalisation de la présente invention, le lait de chaux de l'étape d'extinction a une viscosité Brookfield allant de 1 mPa.s à 1 000 mPa.s à 25°C, par exemple de 5 mPa.s à 800 mPa.s à 25°C ou par exemple de 10 mPa.s à 500 mPa.s à 25°C, tel que mesuré à 100 tr/min.

Dans le cadre de la présente invention, de l'eau supplémentaire peut être introduite au cours de la réaction d'extinction afin de contrôler et/ou de maintenir et/ou d'atteindre la teneur en matière sèche ou la viscosité Brookfield du lait de chaux désirée.

L'étape d'extinction du procédé peut être réalisée sous la forme d'un procédé discontinu, semi-continu ou continu.

Dans l'étape d'extinction, le matériau contenant de l'oxyde de calcium et l'eau peuvent être mélangés en un rapport en poids allant de 1:1 à 1 : 12, par exemple de 1:2 à 1:12, par exemple de 1:2,5 à 1:6.

Selon un mode de réalisation, ladite solution de cellulose carboxylée dépolymérisée est utilisée en combinaison avec au moins un additif d'extinction.

Dans ce cas, le au moins un additif d'extinction peut être choisi dans le groupe constitué par les acides organiques, les sels d'acide organique, les alcools de sucre, les monosaccharides, les disaccharides, les polysaccharides, les gluconates, les phosphonates, les lignosulfonates et leurs mélanges.

Selon un mode de réalisation, le au moins un additif d'extinction est choisi dans le groupe constitué par le citrate de sodium, le citrate de potassium, le citrate de calcium, le citrate de magnésium, les monosaccharides, les disaccharides, les polysaccharides, le sucrose, les alcools de sucre, le méritol, l'acide citrique, le sorbitol, le sel de sodium de l'acide diéthylènetriamine pentaacétique, les gluconates, les phosphonates, le tartrate de sodium, le lignosulfonate de sodium, le lignosulfonate de calcium et leurs mélanges.

*Étape de carbonatation*

Dans cette étape du procédé de production de CCP, c'est-à-dire l'étape de carbonatation (nommée étape ii) ci-dessus), le lait de chaux obtenu à l'issue de l'étape d'extinction est carbonaté pour former une suspension aqueuse de carbonate de calcium précipité.

La carbonatation est réalisée par des moyens et dans des conditions bien connus de l'homme du métier. L'introduction de dioxyde de carbone dans le lait de chaux augmente rapidement la concentration en ions carbonates ($CO_3^{2-}$) et le carbonate de calcium est formé. En particulier, la réaction de carbonatation peut être aisément contrôlée en tenant compte des réactions impliquées dans le procédé de carbonatation. Le dioxyde de carbone se dissout, selon sa pression partielle, pour former des ions carbonates via la formation d'acide carbonique ($H_2CO_3$) et d'ions hydrogénocarbonates ($HCO_3^-$) instables en solution alcaline. Lors de la dissolution continue du dioxyde de carbone, les ions hydroxydes sont consommés et la concentration en ions carbonates augmente jusqu'à ce que la concentration en carbonate de calcium dissout soit supérieure au produit de solubilité et que le carbonate de calcium solide précipite.

Selon un mode de réalisation de la présente invention, la carbonatation est réalisée en incorporant du dioxyde de carbone gazeux pur ou des gaz techniques contenant au moins 10 % en volume de dioxyde de carbone dans le lait de chaux. La progression de la réaction de carbonatation peut être aisément observée en mesurant la conductivité et/ou le pH. À cet égard, le pH du lait de chaux avant l'ajout de dioxyde de carbone sera supérieur à 10, généralement compris entre 11 et 12,5 et diminuera continuellement jusqu'à obtention d'un pH d'environ 7. La réaction peut alors être stoppée. La conductivité diminue lentement au cours de la réaction de carbonatation puis diminue rapidement pour atteindre de faibles valeurs lorsque la précipitation est terminée. La progression de la carbonatation peut être surveillée en mesurant le pH et/ou la conductivité du mélange réactionnel.

Selon un mode de réalisation du procédé de production de CCP, la température du lait de chaux obtenu à l'issue de l'étape d'extinction, qui est utilisé dans l'étape de carbonatation, est ajustée afin d'être comprise dans la gamme allant de 20°C à 60°C et, par exemple, de 30°C à 50°C. Il apparaitra évident à l'homme du métier que la température initiale du lait de chaux n'est pas nécessairement la même que la température du mélange préparé dans l'étape de carbonatation du fait du caractère exothermique de la réaction de carbonatation et/ou du mélange de substances ayant différentes températures.

Selon un mode de réalisation du procédé de production de CCP, l'étape de carbonatation est réalisée à une température comprise entre 5°C et 95°C, par exemple de 30°C à 70°C et, par exemple, de 40°C à 60°C.

L'étape de carbonatation du procédé peut être réalisée sous la forme d'un procédé discontinu, semi-continu ou continu. Selon un mode de réalisation, le procédé de production de CCP impliquant les étapes d'extinction et de carbonatation du procédé est réalisé sous la forme d'un procédé discontinu, semi-continu ou continu.

Selon un mode de réalisation de la présente invention, le procédé de production de CCP ne comprend pas d'étape de concentration de la suspension aqueuse de carbonate de calcium précipité obtenue aux étapes d'extinction et de carbonatation du procédé.

Ainsi, la présente invention concerne l'utilisation de cellulose carboxylée dépolymérisée dans un procédé de préparation de CCP, plus précisément dans l'étape de préparation d'un lait de chaux qui doit être carbonaté par la suite. Sans vouloir être lié à une théorie quelconque, on peut penser que l'affinité des particules de CCP formées au cours du procédé décrit ci-dessus avec les fibres ou fibrilles de cellulose de la feuille de papier est améliorée du fait de l'utilisation de ladite cellulose carboxylée dépolymérisée au cours du procédé de production de CCP. En effet, lorsque la cellulose carboxylée dépolymérisée est présente lors de l'étape d'extinction du matériau contenant de l'oxyde de calcium pour former le CCP, on peut penser que celle-ci est incorporée au sein des particules de CCP et joue, ainsi, un rôle liant entre ces particules de CCP et le matelas fibreux de la cellulose utilisée pour former la feuille de papier.

Selon un mode de réalisation de la présente invention, l'utilisation de cellulose carboxylée dépolymérisée au cours du procédé de préparation de CCP confère aux suspensions aqueuses de CCP produites un potentiel Zêta inférieur à 0 mV, mais supérieur au potentiel Zêta d'un CCP préparé en présence de polymères chargés négativement, par exemple les polymères de l'acide (méth)acrylique, notamment ceux décrits dans la demande WO 2005/000742 A1, ce qui reste un avantage pour l'application charge de masse.

Selon un autre mode de réalisation, les suspensions aqueuses de CCP obtenues en utilisant la cellulose carboxylée dépolymérisée sont caractérisées en ce qu'elles ont un potentiel Zêta inférieur à 0 mV, par exemple compris entre 0 mV et - 40 mV, par exemple entre 0 mV et - 30 mV.

Selon un mode de réalisation, l'utilisation de cellulose carboxylée dépolymérisée au cours du procédé de préparation du CCP confère aux suspensions aqueuses de CCP produites une charge Mütek inférieure à 0 $\mu$eq/g.

Selon un autre mode de réalisation, les suspensions aqueuses de CCP obtenues en utilisant la cellulose carboxylée dépolymérisée sont caractérisées en ce qu'elles présentent une charge Mütek inférieure à 0 $\mu$eq/g, par exemple comprise entre 0 $\mu$eq et - 1 $\mu$eq/g ou entre 0 $\mu$eq et - 0,8 $\mu$eq/g.

Selon un mode de réalisation de la présente invention, la cellulose carboxylée dépolymérisée est ajoutée au cours de la première étape du procédé de production de CCP, c'est-à-dire que la cellulose carboxylée dépolymérisée est ajoutée avant ou pendant l'étape d'extinction. Le lait de chaux, connu de l'homme du métier, obtenu par extinction d'un matériau contenant de l'oxyde de calcium avec de l'eau a généralement un pH compris entre 11 et 12,5 mesuré à une température de 25°C selon la concentration du matériau contenant de l'oxyde de calcium dans le lait de chaux. Étant donné que la réaction d'extinction est exothermique, la température du lait de chaux peut atteindre une température supérieure à 80°C, par exemple comprise entre 80°C et 99°C. Selon un mode de réalisation, la cellulose carboxylée dépolymérisée, utilisée dans le cadre de la présente invention, est choisie de sorte à être stable dans une suspension aqueuse ayant un pH de 12 et une température de 90°C. Au sens de la présente invention, « stable dans une suspension aqueuse ayant un pH de 12 et une température de 90°C » signifie que l'additif polymérique conserve ses propriétés physiques et sa structure chimique lorsqu'il est ajouté à une suspension aqueuse ayant un pH de 12 et une température de 90°C. Par exemple, l'additif polymérique conserve ses qualités de dispersion et n'est pas dégradé dans lesdites conditions.

Selon un mode de réalisation de la présente invention, la cellulose carboxylée dépolymérisée est ajoutée en une quantité allant de 0,01 % en poids à 2 % en poids, par exemple de 0,02 % en poids à 1 % en poids et, par exemple, de 0,05 % en poids à 0,5 % en poids par rapport au poids total du matériau contenant de l'oxyde de calcium.

EP 3 325 409 B1

*Additif d'extinction*

Dans la première étape du procédé de production de CCP (ou étape d'extinction), au moins un additif d'extinction peut être utilisé en plus de la cellulose carboxylée dépolymérisée. Ainsi, selon un mode réalisation, ladite solution de cellulose carboxylée dépolymérisée est utilisée en combinaison avec au moins un additif d'extinction.

Le au moins un additif d'extinction peut être choisi dans le groupe constitué par les acides organiques, les sels d'acide organique, les alcools de sucre, les monosaccharides, les disaccharides, les polysaccharides, les gluconates, les phosphonates, les lignosulfonates et leurs mélanges.

Selon un mode de réalisation de la présente invention, le au moins un additif d'extinction est choisi dans le groupe constitué par le citrate de sodium, le citrate de potassium, le citrate de calcium, le citrate de magnésium, les monosaccharides, les disaccharides, les polysaccharides, le sucrose, les alcools de sucre, le méritol, l'acide citrique, le sorbitol, le sel de sodium de l'acide diéthylènetriamine pentaacétique, les gluconates, les phosphonates, le tartrate de sodium, le lignosulfonate de sodium, le lignosulfonate de calcium et leurs mélanges. Selon un mode de réalisation préféré, le au moins un additif d'extinction est du citrate de sodium et/ou du saccharose.

Selon un mode de réalisation de la présente invention, le au moins un additif d'extinction utilisé est constitué d'un seul type d'additif d'extinction. Alternativement, le au moins un additif d'extinction utilisé peut être constitué d'un mélange d'au moins deux types d'additifs d'extinction.

Le au moins un additif d'extinction peut être ajouté en une quantité allant de 0,01 % en poids à 2 % en poids par rapport à la quantité totale de matériau contenant de l'oxyde de calcium, par exemple en une quantité allant de 0,05 % à 1 % en poids, par exemple de 0,06 % à 0,8 % en poids ou par exemple de 0,07 % à 0,5 % en poids.

L'ajout d'un additif d'extinction peut être utile pour contrôler la taille des particules de CCP et leur morphologie cristalline sans affecter la viscosité de la suspension aqueuse. Comme cela a été mentionné précédemment, les inventeurs ont constaté avec surprise que l'ajout d'une cellulose carboxylée dépolymérisée telle que définie précédemment éventuellement combinée à l'ajout d'un additif d'extinction avant ou pendant l'étape d'extinction d'un procédé de production de CCP peut permettre la préparation d'une suspension de CCP ayant une forte teneur en matière sèche. On pense également que l'omission d'une étape de concentration améliore la qualité des particules de CCP produites étant donné que les dommages de surface des particules, qui peuvent se produire au cours de l'étape de concentration, sont évités. Il est également estimé que ladite suspension de CCP peut être davantage concentrée jusqu'à une teneur en matière solide de 52 % en poids avec des viscosités acceptables, par exemple des viscosités Brookfield inférieures ou égales à 1 000 mPa.s à 25°C et à 100 tr/min.

*Étapes supplémentaires du procédé*

Le procédé de production de carbonate de calcium précipité peut comprendre des étapes supplémentaires.

Le lait de chaux peut être tamisé afin d'éliminer les particules surdimensionnées. Un tamis approprié peut comprendre, par exemple, un tamis ayant un calibre de 100 $\mu$m à 700 $\mu$m, par exemple environ 100 $\mu$m ou environ 300 $\mu$m. Selon un mode de réalisation de la présente invention, le lait de chaux est tamisé après l'étape d'extinction et avant l'étape de carbonatation, par exemple à l'aide d'un tamis ayant un calibre allant de 100 $\mu$m à 300 $\mu$m. Le procédé de production de carbonate de calcium précipité peut comprendre, en outre, une étape supplémentaire de séparation du carbonate de calcium précipité de la suspension aqueuse obtenue à l'issue de l'étape de carbonatation.

Aux fins de la présente invention, l'expression « séparation » signifie que le CCP est éliminé ou isolé de la suspension aqueuse obtenue à l'étape de carbonatation du procédé. Tous moyens de séparation conventionnels connus de l'homme du métier peuvent être utilisés, par exemple un moyen mécanique et/ou thermique. Des exemples de procédés de séparation mécanique sont la filtration, par exemple au moyen d'un filtre à tambour ou d'un filtre presse, la nanofiltration ou la centrifugation. Un exemple de procédé de séparation thermique est un procédé de concentration par application de chaleur, par exemple dans un évaporateur.

Le CCP obtenu peut être transformé, par exemple désaggloméré ou soumis à une étape de broyage à sec. Il peut également être broyé par voie humide sous forme de suspension. Si le CCP est soumis à des étapes de déshydratation, de dispersion et/ou de broyage, ces étapes peuvent être accomplies par des méthodes connues dans l'art. Le broyage par voie humide peut être effectué en l'absence ou en présence d'un agent d'aide au broyage. Des dispersants peuvent également être inclus pour préparer des dispersions, le cas échéant. Le procédé de production de carbonate de calcium précipité peut comprendre, en outre, une étape additionnelle de séchage du carbonate de calcium précipité, par exemple carbonate de calcium précipité séparé obtenu à l'issue de l'étape de séparation ci-dessus décrite.

Le terme « séchage » fait référence à un procédé selon lequel au moins une partie de l'eau est éliminée d'un matériau devant être séché, de sorte qu'un poids constant du matériau « sec » obtenu à 120°C soit atteint. De plus, un matériau « sec » peut être, en outre, défini par sa teneur totale en humidité qui, sauf indication contraire, est inférieure ou égale à 1,0 % en poids, de préférence inférieure ou égale à 0,5 % en poids, plus préférentiellement inférieure ou égale à 0,2 % en poids et de manière préférée entre toutes comprise entre 0,03 % en poids et 0,07 % en poids par rapport au poids total du matériau sec.

En général, l'étape de séchage peut être réalisée en utilisant n'importe quel équipement de séchage approprié et peut, par exemple, comprendre un séchage thermique et/ou un séchage sous pression réduite en utilisant un équipement tel qu'un évaporateur, un séchoir éclair, un four, un séchoir par pulvérisation et/ou un séchage dans une chambre à vide. L'étape de séchage conduit à un carbonate de calcium précipité sec ayant une faible teneur totale en humidité qui est inférieure ou égale à 1,0 % en poids par rapport au poids total du carbonate de calcium précipité sec.

Le carbonate de calcium précipité obtenu par le procédé de l'invention peut être post-traité, par exemple pendant et/ou après une étape de séchage, par un composant supplémentaire. Selon un mode de réalisation, le carbonate de calcium précipité est traité par un acide gras, par exemple l'acide stéarique, un silane ou des esters phosphoriques d'acide gras.

Selon un mode de réalisation du procédé de production de CCP, le carbonate de calcium précipité obtenu a une granulométrie médiane en poids d$_{50}$ allant de 0,1 $\mu$m à 100 $\mu$m, par exemple de 0,25 $\mu$m à 50 $\mu$m, par exemple de 0,3 $\mu$m à 5 $\mu$m et, par exemple, de 0,4 $\mu$m à 3,0 $\mu$m.

Le carbonate de calcium précipité peut avoir une structure cristalline aragonite, calcite ou vatérite ou des mélanges de ces structures. Un autre avantage de la présente invention est que la structure cristalline et la morphologie du carbonate de calcium précipité peuvent être contrôlées, par exemple en ajoutant des cristaux de germination ou d'autres produits chimiques modificateurs de structure. Selon un mode de réalisation préféré, le carbonate de calcium précipité obtenu par le procédé de l'invention a une structure cristalline scalénoédrique en clusters.

La surface spécifique BET du carbonate de calcium précipité obtenu par le procédé selon la présente invention peut aller de 1 m$^2$/g à 100 m$^2$/g, par exemple de 2 m$^2$/g à 70 m$^2$/g, par exemple de 3 m$^2$/g à 50 m$^2$/g, par exemple de 4 m$^2$/g à 30 m$^2$/g, mesurée en utilisant de l'azote et la méthode BET conformément à la norme ISO 9277. La surface spécifique BET du carbonate de calcium précipité obtenu par le procédé de la présente invention peut être contrôlée en utilisant des additifs, par exemple des agents tensioactifs, qui impliquent un cisaillement au cours de l'étape de précipitation ou par la suite des taux de cisaillement mécanique élevés conduisant non seulement à une faible granulométrie mais aussi à une surface spécifique BET élevée.

Selon un mode de réalisation de la présente invention, la suspension de carbonate de calcium précipité obtenue a une teneur en matière sèche d'au moins 10 % en poids, par exemple allant de 20 % à 50 % en poids, par exemple de 25 % à 45 % en poids ou par exemple de 30 % à 40 % en poids par rapport au poids total de la suspension.

Selon un mode de réalisation de la présente invention, la suspension de CCP a une viscosité Brookfield inférieure ou égale à 1 000 mPa.s à 25°C, par exemple inférieure ou égale à 800 mPa.s à 25°C ou par exemple inférieure ou égale à 600 mPa.s à 25°C telle que mesurée à 100 tr/min.

Un autre aspect de la présente invention concerne l'utilisation d'une combinaison d'au moins un polymère hydrosoluble et d'un additif d'extinction dans un procédé de production d'une suspension aqueuse de carbonate de calcium précipité, dans laquelle :

-	la solution de cellulose carboxylée dépolymérisée présente un extrait sec compris entre 25 % et 40 % en poids par rapport au poids total de la solution et un poids moléculaire compris entre 10 000 g/mol et 40 000 g/mol et

-	l'additif d'extinction est choisi dans le groupe constitué par les acides organiques, les sels d'acide organique, les alcools de sucre, les monosaccharides, les disaccharides, les polysaccharides, les gluconates, les phosphonates, les lignosulfonates et leurs mélanges.

## EXEMPLES

### 1. Méthodes de mesure

Les méthodes de mesure mises en œuvre dans les exemples sont décrites ci-après.

Viscosité Brookfield

La viscosité Brookfield des suspensions aqueuses a été mesurée après une heure de production et après une minute d'agitation à 25°C ± 1°C à 100 tr/min en utilisant un viscosimètre Brookfield de type RVT équipé d'un mobile à disque approprié, par exemple un mobile 2 à 5.

Mesure de pH

Le pH d'une suspension ou d'une solution a été mesurée à 25°C en utilisant un pH-mètre Mettler Toledo Seven Easy et une électrode de pH Mettler Toledo InLab® Expert Pro. Un étalonnage à trois points (selon la méthode de segmentation) de l'instrument a été effectué dans un premier temps en utilisant des solutions tampons disponibles dans le commerce (auprès de Sigma-Aldrich Corp., USA) ayant un pH de 4, 7 et 10 à 20°C. Les pH communiqués sont les valeurs terminales détectées par l'instrument (la mesure est terminée lorsque le signal mesuré diffère de moins de 0,1 mV de la moyenne sur les 6 dernières secondes).

### Distribution granulométrique

La distribution granulométrique des particules de CCP préparées a été mesurée en utilisant un appareil Sedigraph 5100 de la société Micromeritics, USA. La méthode et l'instrument sont connus de l'homme du métier et sont couramment utilisés pour déterminer la taille de grain des charges minérales et des pigments. La mesure a été effectuée dans une solution aqueuse comprenant 0,1 % en poids de $Na_4P_2O_7$. Les échantillons ont été dispersés en utilisant un agitateur à grande vitesse et des ultrasons. Pour la mesure des échantillons dispersés, aucun autre agent de dispersion n'a été ajouté.

### Teneur en matière sèche d'une suspension aqueuse

La teneur en matière sèche de la suspension (également appelée « poids sec ») a été déterminée en utilisant un Analyseur d'Humidité MJ33 de la société Mettler-Toledo, Suisse, avec les réglages suivants : température de séchage de 160°C, arrêt automatique si la masse ne varie pas de plus de 1 mg sur une période de 30 secondes, séchage standard de 5 g à 20 g de suspension.

### Surface Spécifique (SS)

La surface spécifique a été mesurée à l'aide de la méthode BET conformément à la norme ISO 9277 en utilisant de l'azote, suivie d'un conditionnement de l'échantillon par chauffage à 250°C pendant une période de 30 minutes. Avant de procéder à ces mesures, l'échantillon est filtré sur un entonnoir Büchner, rincé avec de l'eau désionisée et séché durant une nuit entière à une température comprise entre 90°C et 100°C dans un four. Ensuite, le gâteau de filtration sec est broyé minutieusement dans un mortier et la poudre résultante est placée dans une balance d'analyse d'humidité à 130°C jusqu'à obtention d'un poids constant.

### Durée spécifique de carbonatation

Le contrôle de la conductivité, qui décroit lentement au cours de la réaction de carbonatation puis diminue rapidement pour atteindre une valeur minimale indiquant de ce fait que la réaction est terminée, a été utilisé pour déterminer la durée nécessaire pour permettre la précipitation complète. La durée spécifique de carbonatation (min/kg de $Ca(OH)_2$) a été déterminée par la formule suivante :

$$Durée\ spécifique\ Carbonatation = \frac{10^5 \cdot Tf}{M.TMS_{LdC}}$$

dans laquelle :

- Tf (min) est le temps nécessaire pour achever la carbonatation du lait de chaux, tel que déterminé en surveillant la conductivité,
- M (g) est le poids du lait de chaux introduit dans le réacteur de carbonatation et
- $TMS_{LdC}$ (%) est la teneur en matière sèche en poids du lait de chaux.

### Mesure de la charge - Mütek

La mesure de la charge a été effectuée en utilisant un appareil Mütek PCD 03 équipé d'un titreur Mütek PCD.
0,5 g à 1 g de CCP sec est pesé dans la cellule de mesure en plastique et dilué avec 20 mL d'eau désionisée. Mettre le piston de déplacement en position « marche ». Tandis que le piston oscille dans la cellule, attendre que le courant d'écoulement entre les deux électrodes se stabilise.
Le signe de la valeur mesurée affiché à l'écran indique si la charge de l'échantillon est positive (cationique) ou négative (anionique). Un polyélectrolyte de charge opposée ayant une densité de charge connue est ajouté à l'échantillon en tant qu'agent de titrage (soit du polyoxyéthylènesulfate de sodium à 0,001 N soit du pDADMAC à 0,001 N). Les charges de l'agent de titrage neutralisent les charges existantes de l'échantillon. Le titrage est interrompu dès que le point de charge nulle (0 mV) est atteint.

La consommation de l'agent de titrage en mL sert de base aux calculs ultérieurs. La quantité de charge spécifique q [eq/g de suspension] est calculée selon la formule suivante :

$$q = (V * c) / m$$

V : volume d'agent de titrage consommé [L]
c : concentration de l'agent de titrage [eq/L] ou [$\mu$eq/L]
m : masse de la suspension pesée [g]
q : quantité de charge spécifique [eq/g de suspension] ou [$\mu$eq/g de suspension]

Potentiel Zêta

Pour mesurer le potentiel Zêta, quelques gouttes de suspension de CCP sont dispersées dans une quantité suffisante de sérum obtenue par filtration mécanique de ladite suspension afin d'obtenir une suspension colloïdale légèrement trouble.

Cette suspension est introduite dans la cellule de mesure de l'appareil Zetasizer Nano-ZS de Malvern qui affiche directement la valeur du potentiel Zêta de la suspension de CCP en mV.

**2. Préparation d'une CMC dépolymérisée**

Le procédé de préparation de la CMC dépolymérisée selon l'invention comporte trois étapes : une étape de dépolymérisation, une étape de refroidissement et une étape de neutralisation.

*Etape de dépolymérisation*

Dans un réacteur d'un litre, on introduit 800 g d'eau bi-permutée et 0,017 g de catalyseur $FeSO_4.7H_2O$. On chauffe le réacteur à 80°C $\pm$ 2°C. Puis, on injecte pendant 2h45 une solution de peroxyde d'hydrogène à 35 % massique à 189 mg/min ainsi que de la CMC (Sigma-Aldrich de référence 419281, Mw = 250 000 g/mol, DS = 1,2) par aliquotes de 25 g toutes les 15 minutes (procédé en continu). On laisse la réaction se poursuivre durant 2h30 après la fin des injections. On vérifie que la totalité du peroxyde d'hydrogène a été consommée.

*Etape de refroidissement*

Le réacteur est refroidi à 70°C. Le pH tel que mesuré dans le réacteur est de 4,4.

*Etape de neutralisation*

On introduit une solution de NaOH 10 % de manière à atteindre un pH de 7,4.

**Caractérisation de la CMC dépolymérisée ainsi obtenue :**

| | |
|---|---|
| $V_B$ à $t_0$ (mPa.s) | = eau |
| $V_B$ de la solution de CMC dépolymérisée obtenue (mPa.s) | 725 |
| ES (% en poids) | 33,9 |
| Durée totale procédé | 4h45 |
| Mw (g/mol) | 13 310 |
| IP | 4 |

**Méthode de détermination du poids moléculaire (Mw) et indice IP de la CMC dépolymérisée** :

Le poids moléculaire de la CMC est déterminée par Chromatographie d'Exclusion Stérique (CES) ou en anglais « Gel Permeation Chromatography » (GPC).

Une telle technique met en œuvre en l'espèce un appareil de chromatographie liquide de marque WATERS™ doté d'un détecteur. Ce détecteur est un détecteur de concentration réfractométrique de marque WATERS™.

Cet appareillage de chromatographie liquide est doté d'une colonne d'exclusion stérique convenablement choisie par l'homme du métier afin de séparer les différents poids moléculaires des CMC étudiées. La phase liquide d'élution est une phase aqueuse ajustée à pH 9,00 par de la soude 1N contenant 0,05M de $NaHCO_3$, 0,1M de $NaNO_3$, 0,02M de triétanolamine et 0,03 % de $NaN_3$.

De manière détaillée, selon une première étape, on dilue à 0,9 % sec la solution de CMC dans le solvant de solubilisation de la CES, qui correspond à la phase liquide d'élution de la CES à laquelle est ajoutée 0,04 % de diméthylformamide qui joue le rôle de marqueur de débit ou étalon interne. Puis, on filtre à 0,2 μm. 100 μL sont ensuite injectés dans l'appareil de chromatographie (éluant : une phase aqueuse ajustée à pH 9,00 par de la soude 1N contenant 0,05M de $NaHCO_3$, 0,1M de $NaNO_3$, 0,02M de triétanolamine et 0,03 % de $NaN_3$).

L'appareil de chromatographie liquide contient une pompe isocratique (WATERS™ 515) dont le débit est réglé à 0,8 mL/min. L'appareil de chromatographie comprend également un four qui lui-même comprend en série le système de colonnes suivant : une précolonne de type GUARD COLUMN ULTRAHYDROGEL WATERS™ de 6 cm de long et 40 mm de diamètre intérieur et une colonne linéaire de type ULTRAHYDROGEL WATERS™ de 30 cm de long et 7,8 mm de diamètre intérieur. Le système de détection, quant à lui, se compose d'un détecteur réfractométrique de type RI WATERS™ 410. Le four est porté à la température de 60°C et le réfractomètre est porté à la température de 45°C.

L'appareil de chromatographie est étalonné par des étalons de polyacrylate de sodium en poudre de différentes masses moléculaires certifiées pour le fournisseur : POLYMER STANDARDS SERVICE ou AMERICAN POLYMER STANDARDS CORPORATION.

### 3. Préparation de Carbonate de Calcium Précipité (CCP) :

Un lait de chaux a été préparé en mélangeant sous agitation mécanique de l'eau et différents additifs polymères, éventuellement en présence d'un additif d'extinction (par exemple du citrate de sodium sec, NaCi), à une température initiale comprise entre 40°C et 41°C (les quantités d'additifs polymères et éventuellement d'additifs d'extinction sont indiquées dans le Tableau 1 ci-dessous). Ensuite, de l'oxyde de calcium (chaux vive brute de Golling, Autriche) a été ajouté sous agitation. Le mélange obtenu a été agité pendant 25 min puis tamisé à travers un tamis de 200 μm.

Le lait de chaux obtenu a été transféré dans un réacteur en acier inoxydable dans lequel le lait de chaux a été refroidi à 50°C. Puis, le lait de chaux a été carbonaté en introduisant un mélange air/$CO_2$ (26 % en volume de $CO_2$ et un débit de 23 L/min). Au cours de l'étape de carbonatation, le mélange réactionnel a été agité à une vitesse de 1 400 tr/min. La cinétique de la réaction a été surveillée par des mesures de pH et de conductivité en ligne.

Additifs polymères cités en exemple :

P1 = CMC dépolymérisée préparée selon 2 (selon l'invention),

P2 = CMC non dépolymérisée - Blanose ® Ashland 12M8P (degré de substitution 1,2 et poids moléculaire 395 000 g/mol) (hors invention) et

P3 = polyacrylate de sodium (hors invention) - Mw = 4 270 g/mol, PDI = 2,3 (Mw et PDI déterminés selon la demande de brevet non publiée EP 14166751.9)

**Tableau 1** Caractéristiques des laits de chaux

| | | Additif polymère | Quantité d'additif polymère [% en poids CaO] | Additif d'extinction | Quantité d'additif d'extinction [% en poids CaO] | Teneur en matière solide du lait de chaux [% en poids] |
|---|---|---|---|---|---|---|
| 1 | HINV | aucun | -- | NaCi | 0,1 | 25,2 |
| 2 | HINV | aucun | -- | NaCi | 0,1 | 16,2 |
| 3 | INV | P1 | 0,15 | NaCi | 0,1 | 28,1 |
| 4 | HINV | P2 | 0,15 | NaCi | 0,1 | 28,1 |
| 5 | HINV | P3 | 0,15 | NaCi | 0,1 | 29,5 |
| (INV : selon l'INVention - HINV : Hors INVention) | | | | | | |

Les caractéristiques des laits de chaux et des suspensions aqueuses de CCP préparés sont décrites dans le Tableau 2 ci-dessous.

**Tableau 2** Caractéristiques des laits de chaux et des suspensions aqueuses de CCP

| Essais | Viscosité du lait de chaux (mPa.s) à 100 tr/min | Durée de carbonatation (min/kg de Ca $(OH)_2$) | Teneur en matière solide de CCP-S [% en poids] | Viscosité du CCP-S (mPa.s) à 100 tr/min | Potentiel Zêta (mV) | Mutek ($\mu$eq/g) | D50 ($\mu$m) | SS ($m^2$/g) |
|---|---|---|---|---|---|---|---|---|
| 1 HINV | *Viscosité du lait de chaux trop élevée* | | | | *Non mesurés* | | | |
| 2 HINV | 23 | 44,2 | 20,5 | 20 | + 5,5 | 0,1 | 1,6 | 4,7 |
| 3 INV | 410 | 47 | 36,6 | 597 | -29,1 | -0,5 | 1,5 | 4,7 |
| 4 HINV | *Viscosité du lait de chaux trop élevée - effet* | | | | *Non mesurés* | | | |
| 5 HINV | 329 46,5 37,6 940 | | | | -35,2 | -0,9 | 1,3 | 5 |
| (INV : selon l'INVention - HINV : Hors INVention) | | | | | | | | |

Les résultats consignés dans le Tableau 2 montrent que l'utilisation d'un additif d'extinction seul conduit à un lait de chaux ayant une viscosité Brookfield élevée (essai 1) et qu'il n'est pas possible d'augmenter la teneur en matière sèche du lait de chaux (% en poids) tout en empêchant l'augmentation de la viscosité de la suspension (comparaison de l'essai 1 et de l'essai 2).

En revanche, l'échantillon 3 selon l'invention confirme que les viscosités du lait de chaux et de la suspension de CCP obtenues sont compatibles avec l'utilisation prévue du CCP ainsi obtenu, c'est-à-dire des suspensions de CCP ayant une viscosité Brookfield inférieure ou égale à 1 500 mPa.s à 25°C, par exemple inférieure ou égale à 1 000 mPa.s à 25°C ou inférieure ou égale à 600 mPa.s à 25°C, à 100 tr/min.

De plus, la cinétique de carbonatation et la structure cristallographique du CCP préparé (résultats non fournis) sont similaires à celles obtenues avec un procédé impliquant l'utilisation d'un polymère anionique (polymère P3 hors invention, à titre de comparaison uniquement).

**Revendications**

1. Utilisation d'au moins une solution de cellulose carboxylée dépolymérisée pour préparer une suspension aqueuse de Carbonate de Calcium Précipité (CCP) par extinction d'un matériau contenant de l'oxyde de calcium dans de l'eau puis carbonatation du lait de chaux ainsi obtenu, ladite solution de cellulose carboxylée dépolymérisée présentant un extrait sec compris entre 25 % et 40 % en poids par rapport au poids total de la solution et un poids moléculaire Mw compris entre 10 000 g/mol et 40 000 g/mol.

2. Utilisation selon la revendication 1, selon laquelle ladite cellulose carboxylée dépolymérisée présente un indice de polydispersité IP compris entre 2 et 10.

3. Utilisation selon l'une des revendications précédentes, selon laquelle ladite cellulose carboxylée dépolymérisée est partiellement ou totalement neutralisée au moyen d'un ou plusieurs agent(s) de neutralisation choisi(s) dans le groupe consistant en les hydroxydes de sodium, les hydroxydes de calcium, les hydroxydes de magnésium, les hydroxydes de potassium et les amines.

4. Utilisation selon l'une quelconque des revendications précédentes, selon laquelle ladite solution de cellulose carboxylée dépolymérisée est présente dans l'eau d'extinction du matériau contenant de l'oxyde de calcium.

5. Utilisation selon l'une quelconque des revendications précédentes, selon laquelle ledit matériau contenant de l'oxyde de calcium et l'eau sont mélangés en un rapport en poids allant de 1:1 à 1:12.

6. Utilisation selon l'une quelconque des revendications précédentes, selon laquelle ladite solution de cellulose carboxylée dépolymérisée est utilisée en combinaison avec au moins un additif d'extinction.

7. Utilisation selon la revendication précédente, selon laquelle le au moins un additif d'extinction est choisi dans le groupe constitué par le citrate de sodium, le citrate de potassium, le citrate de calcium, le citrate de magnésium, les monosaccharides, les disaccharides, les polysaccharides, le sucrose, les alcools de sucre, le méritol, l'acide citrique, le sorbitol, le sel de sodium de l'acide diéthylènetriamine pentaacétique, les gluconates, les phosphonates, le tartrate de sodium, le lignosulfonate de sodium, le lignosulfonate de calcium et leurs mélanges.

8. Utilisation selon l'une quelconque des revendications précédentes, selon laquelle le lait de chaux a une viscosité Brookfield allant de 1 mPa.s à 1 000 mPa.s à 25°C, à 100 tr/min.

9. Utilisation selon l'une quelconque des revendications précédentes, selon laquelle la suspension de CCP a une viscosité Brookfield inférieure ou égale à 1 000 mPa.s à 25°C, à 100 tr/min.

10. Utilisation selon l'une quelconque des revendications précédentes, selon laquelle la suspension de carbonate de calcium précipité obtenue a une teneur en matière sèche d'au moins 10 % en poids par rapport au poids total de la suspension.

**Patentansprüche**

1. Verwendung mindestens einer depolymerisierten carboxylierten Cellulose-Lösung zur Herstellung einer wässrigen Suspension aus gefälltem Calciumcarbonat (PCC) durch Löschen in Wasser eines Materials, das Calciumoxid enthält, und anschließendes Karbonatisieren von somit erhaltener Kalkmilch, wobei diese Lösung aus depolymerisierter carboxylierter Cellulose einen Trockenextrakt zwischen 25 und 40 Gew.-% bezogen auf das Gesamtgewicht der Lösung und eine molekulare Masse Mw zwischen 10.000 g/mol und 40.000 g/mol enthält.

2. Verwendung nach Anspruch 1, bei der diese depolymerisierte carboxylierte Cellulose einen Polydisperitätsindex IP zwischen 2 und 10 hat.

3. Verwendung nach einem der vorhergehenden Ansprüche, bei der diese depolymerisierte carboxylierte Cellulose durch einen oder mehrere Neutralisierungsmittel teilweise oder vollständig neutralisiert wird, das oder die ausgewählt ist oder sind aus der Gruppe, bestehend aus Natriumhydroxiden, Calciumhydroxiden, Magnesiumhydroxiden, Kaliumhydroxiden und Aminen.

4. Verwendung nach einem beliebigen der vorhergehenden Ansprüche, bei der diese depolymerisierte carboxylierte Cellulose-Lösung im Löschwasser des Materials, das Calciumoxid enthält, vorhanden ist.

5. Verwendung nach irgendeinem der vorhergehenden Ansprüche, bei der dieses Material, das Calciumoxid enthält, und Wasser in einem Gewichtsverhältnis von 1:1 bis 1:12 gemischt werden.

6. Verwendung nach irgendeinem der vorhergehenden Ansprüche, bei der diese depolymerisierte carboxylierte Cellulose-Lösung in Kombination mit mindestens einem Löschadditiv verwendet wird.

7. Verwendung nach vorhergehendem Anspruch, bei der mindestens ein Löschadditiv ausgewählt ist aus der Gruppe, bestehend aus Natriumcitrat, Kaliumcitrat, Calciumcitrat, Magnesiumcitrat, den Monosacchariden, den Disacchariden, den Polysacchariden, Sucrose, den Zuckeralkoholen, Meritol, Zitronensäure, Sorbitol, Natriumsalz von Diethylentriaminpentaessigsäure, den Gluconaten, den Phosphaten, Natriumtartrat, Natriumligninsulfonat, Calciumligninsulfonat und deren Mischungen.

8. Verwendung nach einem beliebigen der vorhergehenden Ansprüche, bei der die Kalkmilch eine Brookfield-Viskosität von 1 mPa.s bis 1.000 mPa.s bei 25 °C und bei 100 U/min hat.

9. Verwendung nach einem beliebigen der vorhergehenden Ansprüche, bei der die PCC-Suspension eine Brookfield-Viskosität von weniger oder gleich 1.000 mPa.s bei 25 °C und bei 100 U/min hat.

10. Verwendung nach irgendeinem der vorhergehenden Ansprüche, bei der die erhaltene Suspension aus gefälltem Calciumcarbonat einen Trockenmassegehalt von mindestens 10 Gew.-% bezogen auf das Gesamtgewicht der Suspension hat.

**Claims**

1. Use of at least one depolymerized carboxylated cellulose solution for preparing an aqueous Precipitated Calcium Carbonate (PCC) slurry by slaking of a material containing calcium oxide in water, followed by carbonation of the milk of lime thus obtained, said depolymerized carboxylated cellulose solution exhibiting a solids content of between 25 wt.% and 40 wt.%, based on the total weight of the solution, and a molecular weight Mw of between 10,000 g/mol and 40,000 g/mol.

2. Use as claimed in claim 1, according to which said depolymerized carboxylated cellulose exhibits a polydispersity index PI of between 2 and 10.

3. Use as claimed in either of the preceding claims, according to which said depolymerized carboxylated cellulose is partially or completely neutralized by means of one or more neutralizing agent(s) chosen from the group consisting of sodium hydroxides, calcium hydroxides, magnesium hydroxides, potassium hydroxides and amines.

4. Use as claimed in any one of the preceding claims, in which said depolymerized carboxylated cellulose solution is present in the slaking water of the material containing calcium oxide.

5. Use as claimed in any one of the preceding claims, according to which said material containing calcium oxide and the water are mixed in a weight ratio ranging from 1:1 to 1:12.

6. Use as claimed in any one of the preceding claims, according to which said depolymerized carboxylated cellulose solution is used in combination with at least one slaking additive.

7. Use as claimed in the preceding claim, according to which the at least one slaking additive is chosen from the group consisting of sodium citrate, potassium citrate, calcium citrate, magnesium citrate, monosaccharides, disaccharides, polysaccharides, sucrose, sugar alcohols, meritol, citric acid, sorbitol, the sodium salt of diethylenetriamine pentaacetic acid, gluconates, phosphonates, sodium tartrate, sodium lignosulfonate, calcium lignosulfonate and their mixtures.

8. Use as claimed in any one of the preceding claims, according to which the milk of lime has a Brookfield viscosity ranging from 1 mPa.s to 1,000 mPa.s at 25°C, at 100 rev/min.

9. Use as claimed in any one of the preceding claims, according to which the PCC slurry has a Brookfield viscosity of less than or equal to 1,000 mPa.s at 25°C, at 100 rev/min.

10. Use as claimed in any one of the preceding claims, according to which the precipitated calcium carbonate slurry obtained has a dry solids content of at least 10 wt.%, based on the total weight of the slurry.

## RÉFÉRENCES CITÉES DANS LA DESCRIPTION

**Documents brevets cités dans la description**

- WO 2005000742 A1
- EP 14166751
- FR 1551690
- WO 2007067146 A1
- EP 2868716 A
- US 20130312925 A
- EP 2447213 A1
- EP 2524898 A1
- EP 2371766 A1
- WO 2015063402 A